# EUROPÄISCHE PATENTSCHRIFT

(11) **EP 4 607 043 B1**
(45) Veröffentlichungstag und Bekanntmachung des Hinweises auf die Patenterteilung: **09.09.2026**
(21) Anmeldenummer: 25154814.5
(22) Anmeldetag: 29.01.2025
(51) Int. Cl.: F16B 13/12

(54) **VERFAHREN ZU EINER ABSTANDSBEFESTIGUNG EINES ANBAUTEILS UND ABSTANDSBEFESTIGER ZUR VERWENDUNG IN DEM VERFAHREN**
METHOD FOR FIXING A DISTANCE TO AN ATTACHMENT PART AND DISTANCE FASTENER FOR USE IN THE METHOD
PROCÉDÉ DE FIXATION D'UNE PIÈCE RAPPORTÉE À DISTANCE ET FIXATION D'ÉCARTEMENT À UTILISER DANS LE PROCÉDÉ

(30) Priorität: 20.02.2024 DE 102024104725; 07.01.2025 DE 102025100193
(43) Veröffentlichungstag der Anmeldung: 27.08.2025
(73) Patentinhaber: fischerwerke GmbH & Co. KG, 72178 Waldachtal (DE)
(72) Erfinder: Daly, Aaron, 72285 Pfalzgrafenweiler (DE)
(74) Vertreter: Suchy, Ulrich Johannes

(56) Entgegenhaltungen:
- DE-C2- 2 714 503
- GB-A- 1 270 522
- US-A- 3 662 644

## Beschreibung

Die Erfindung betrifft ein Verfahren zu einer Abstandsbefestigung eines Anbauteils mit den Merkmalen des Oberbegriffs des Anspruchs 1 und einen Abstandsbefestiger zur Verwendung in dem Verfahren mit den Merkmalen des Oberbegriffs des Anspruchs 7. Die Patentanmeldung EP 3 333 434 A1 offenbart einen Spreizdübel für eine Abstandsbefestigung einer Klammer an einer beispielsweise gemauerten Wand, an der eine Gipskartonplatte mit Abstandshaltern als Verschalung angeordnet ist. Der Spreizdübel wird durch ein Loch in der Gipskartonplatte in ein Ankerloch in der Wand eingebracht und weist einen Spreizabschnitt auf, der mit einer Spreizschraube in dem Ankerloch aufgespreizt wird. An den Spreizabschnitt des Spreizdübels schließt sich ein rohrförmiger Dübelschaft an, der einen Zwischenraum zwischen der Wand und der Gipskartonplatte überbrückt und das Loch in der Gipskartonplatte durchsetzt. Zur Versteifung ist ein Metallrohr in den Dübelschaft gesteckt, das von einer der Wand abgewandten Außenseite der Gipskartonplatte bis in das Ankerloch in der Wand reicht und das sich axial an einer Ringschulter in dem Spreizdübel abstützt. Die Spreizschraube spannt die Klammer axial gegen den Dübelschaft und gegen das in den Dübelschaft gesteckte Metallrohr.

Das Dokument US 3 662 644 A zeigt eine Dübelanordnung, insbesondere zur Befestigung von Verkleidungen, umfassend den eigentlichen Dübel selbst, eine Befestigungsschraube, einen Verlängerungsschaft und eine Spreizhülse für letzteren. Der Dübel ist in einem nicht spreizbaren Bereich und/oder im Verlängerungsschaft jeweils mit mindestens einem Drucklager versehen, um die Befestigungsschraube in ihrer axialen Position zu fixieren.

Aufgabe der Erfindung ist, ein Verfahren zu einer Abstandsbefestigung eines Anbauteils mit einer in einem Abstand von dem Ankergrund angebrachten Verschalung mit einem speziell dafür vorgesehenen Abstandsbefestiger vorzuschlagen. Weiterer Gegenstand der Erfindung ist der Abstandsbefestiger.

Diese Aufgabe wird erfindungsgemäß durch die Merkmale der unabhängigen Ansprüche 1 und 7 gelöst.

Das erfindungsgemäße Verfahren ist zu einer Abstandsbefestigung eines Anbauteils in einem ersten Abstand von einem Ankergrund auf einer dem Ankergrund abgewandten Außenseite einer Verschalung vorgesehen, wobei die Verschalung einen zweiten, kleineren Abstand vom Ankergrund aufweist als das Anbauteil. Der Ankergrund ist beispielsweise eine gemauerte oder betonierte Wand eines Gebäudes. Die Verschalung ist vorzugsweise plattenförmig und insbesondere eine Gipskartonplatte. Durch die Verschalung ist oder wird ein durchgehendes Loch und in der Wand ein mit dem Loch fluchtendes Ankerloch gebohrt. Das Anbauteil ist beispielsweise eine Halterung für einen Fernseher oder einen Monitor.

Ein Abstandsbefestiger für die Abstandsbefestigung wird durch das Loch in der Verschalung in das Ankerloch in dem Ankergrund eingebracht. Der Abstandsbefestiger weist einen Spreizdübel und eine Dübelverlängerung auf, die das Loch in der Verschalung durchdringt und einen Zwischenraum zwischen der Verschalung und dem Ankergrund überbrückt. Die Dübelverlängerung kann bis in das Ankerloch in dem Ankergrund reichen. Auf der Seite der Verschalung reicht die Dübelverlängerung vorzugsweise bis mindestens zu der dem Ankergrund abgewandten Außenseite der Verschalung, das heißt die Dübelverlängerung ist bündig mit der Außenseite der Verschalung oder die Dübelverlängerung steht sogar etwas über die Außenseite der Verschalung über, ist also erhaben über die Außenseite der Verschalung.

Der Spreizdübel wird durch das Einbringen des Abstandsbefestigers durch die Verschalung in das Ankerloch im Ankergrund in das Ankerloch eingebracht.

Der Spreizdübel des erfindungsgemäßen Abstandsbefestigers weist ein radial nach außen in eine Widerlagerstellung schwenkbares Widerlager auf, das in einer nicht ausgeschwenkten Grundstellung am Spreizdübel zusammen mit dem Spreizdübel durch das Loch in der Verschalung durchführbar ist. "Radial" bedeutet radial zu einer Längsachse des Spreizdübels, wobei die Längsachse in die Richtung verläuft, in die der Spreizdübel planmäßig in das Loch und das Ankerloch eingebracht wird. Das Widerlager wird beim Einbringen des Spreizdübels durch das Loch in der Verschalung in das Ankerloch in dem Ankergrund in der nicht ausgeschwenkten Grundstellung am Spreizdübel mit dem Spreizdübel durch das Loch in der Verschalung in den Zwischenraum zwischen der Verschalung und dem Ankergrund eingebracht.

In dem Zwischenraum zwischen der Verschalung und dem Ankergrund wird das Widerlager radial nach außen in die Widerlagerstellung geschwenkt und mit dem Spreizdübel bis in Anlage an einer der Verschalung zugewandten Lochmündung des Ankerlochs im Ankergrund gebracht. Das Widerlager legt eine Einbringtiefe des Spreizdübels im Ankerloch in dem Ankergrund und damit auch den ersten Abstand des Anbauteils vom Ankergrund fest, das nach oder bei der Verankerung des Spreizdübels in dem Ankerloch im Ankergrund axial gegen ein verschalungsseitiges hinteres Ende der Dübelverlängerung gespannt wird.

Das erfindungsgemäße Verfahren und der speziell dafür vorgesehene, erfindungsgemäße Abstandsbefestiger ermöglichen die Abstandsbefestigung des Anbauteils am Ankergrund ohne eine mechanische Belastung der Verschalung. Der Spreizdübel nimmt Druckkräfte, wie sie beispielsweise bei einer ausschwenkbaren TV-Halterung durch eine Momentenbelastung auftreten, vom Anbauteil auf und überträgt sie in den Ankergrund. Die Erfindung eignet sich deswegen für die Abstandsbefestigung eines Anbauteils an einer Verschalung geringer mechanischer Festigkeit wie insbesondere einer Gipskartonplatte, die in einem Abstand von einem Ankergrund angeordnet ist und daher selbst nur geringe Druckkräfte aufnehmen kann.

Die abhängigen Ansprüche haben vorteilhafte Ausgestaltungen und Weiterbildungen der Erfindung zum Gegenstand.

Zur Verankerung in dem Ankerloch in dem Ankergrund wird bei einer Ausgestaltung der Erfindung ein stiftförmiges Spreizelement durch die Dübelverlängerung bis in den Spreizdübel eingebracht, der sich in dem Ankerloch befindet. Das stiftförmige Spreizelement spreizt den Spreizdübel auf und verankert den Spreizdübel im Ankerloch. Das Spreizelement ist insbesondere eine Spreizschraube, die durch die Dübelverlängerung eingebracht und in den Spreizdübel eingeschraubt wird.

Das Anbauteil wird mit dem stiftförmigen Spreizelement an dem verschalungsseitigen hinteren Ende der Dübelverlängerung befestigt, insbesondere wird das Anbauteil mit dem stiftförmigen Spreizelement axial in Bezug auf den Abstandsbefestiger gegen das hintere Ende der Dübelverlängerung gespannt. Weil das hintere Ende der Dübelverlängerung bündig mit der Außenseite der Verschalung oder sogar etwas erhaben ist, wird das Anbauteil auf diese Weise ohne Spalt oder mit einem kleinen Spalt auf der Außenseite der Verschalung befestigt, wobei ein Lastabtrag vom Anbauteil über die Dübelverlängerung und den Spreizdübel in den Ankergrund erfolgt.

Beim Einbringen des stiftförmigen Spreizelements in den Spreizdübel schwenkt das stiftförmige Spreizelement das Widerlager radial nach außen in die Widerlagerstellung, bevor das stiftförmige Spreizelement den Spreizdübel aufspreizt, derart, dass der Spreizdübel bis zum Anliegen des Widerlagers in der radial nach außen geschwenkten Widerlagerstellung an der Lochmündung des Ankerlochs in das Ankerloch eingebracht werden kann.

Für eine Querkraftabstützung sieht eine Ausgestaltung der Erfindung vor, dass die Dübelverlängerung in das Ankerloch in dem Ankergrund ragt.

Bei Ausführungen der Erfindung überbrückt das Widerlager den Zwischenraum zwischen der Verschalung und dem Ankergrund. Ein hinteres, der Verschalung zugewandtes Ende des Widerlagers kann in die Verschalung eindringen oder das Widerlager ist kürzer als der Zwischenraum zwischen der Verschalung und dem Ankergrund breit ist. Wenn das Widerlager in die Verschalung eindringt, sichert es den Spreizdübel gegen Drehung beim Einschrauben einer Spreizschraube und stützt die Verschalung in ihrem zweiten Abstand vom Ankergrund ab.

Vorzugsweise begrenzt das Widerlager in der radial nach außen geschwenkten Widerlagerstellung die Einbringtiefe des Spreizdübels in das Ankerloch im Ankergrund durch die Anlage des Widerlagers an der Lochmündung des Ankerlochs derart, dass die Dübelverlängerung aus dem Ankergrund vorsteht.

Der erfindungsgemäße, zur Verwendung in dem erfindungsgemäßen Verfahren vorgesehene Abstandsbefestiger mit den Merkmalen des Anspruchs 7 weist den Spreizdübel, die Dübelverlängerung und das Widerlager auf, das aus der nicht ausgeschwenkten Grundstellung radial nach außen in die Widerlagerstellung schwenkbar ist.

Damit das Widerlager in Richtung seiner Belastung, wenn es sich an der Lochmündung des Ankerlochs abstützt, also in radialer Richtung in Bezug auf den Spreizdübel, biegesteif ist, sieht die Erfindung vor, dass das Widerlager in radialer Richtung in Bezug auf den Spreizdübel breiter als in einer Umfangsrichtung des Spreizdübels dick ist. Mit "breit" und "dick" sind Abmessungen des Widerlagers in den angegebenen Richtungen gemeint. Vorzugsweise schwenkt das stiftförmige Spreizelement, wenn es durch die Dübelverlängerung in den Spreizdübel eingebracht wird, das Widerlager radial nach außen in die Widerlagerstellung, und zwar vorzugsweise bevor das stiftförmige Spreizelement den Spreizdübel aufspreizt, damit der Spreizdübel bis zur Anlage des Widerlagers an der Lochmündung des Ankerlochs in das Ankerloch eingebracht werden kann.

Eine Ausgestaltung der Erfindung sieht vor, dass das in den Spreizdübel eingebrachte, stiftförmige Spreizelement das Widerlager in der radial nach außen geschwenkten Widerlagerstellung hält.

Eine bevorzugte Ausgestaltung des erfindungsgemäßen Abstandsbefestigers sieht mehrere, insbesondere gleichmäßig über den Umfang des Spreizdübels verteilt angeordnete Widerlager vor. Insbesondere weist der Spreizdübel des erfindungsgemäßen Abstandsbefestigers zwei einander gegenüber angeordnete Widerlager auf.

Eine Weiterbildung der Erfindung sieht vor, dass sich ein Zwischenraum zwischen den Widerlagern in der nicht ausgeschwenkten Grundstellung in Richtung des verschalungsseitigen hinteren Endes der Dübelverlängerung beispielsweise V-förmig vergrößert. Radial innere Flächen der Widerlager bilden dadurch Schrägflächen, an denen das stiftförmige Spreizelement die Widerlager radial nach außen in die Widerlagerstellung schwenkt, wenn das Spreizelement durch die Dübelverlängerung in den Spreizdübel eingebracht wird. Die Schrägflächen können in ihrer Längsrichtung gerade oder beispielsweise ballig oder hohlrund sein.

Eine Ausgestaltung der Erfindung sieht vor, dass das Widerlager mindestens etwa 20 mm und vorzugsweise zwischen etwa 22 mm und 25 mm lang ist oder länger. Dies ermöglicht, dass die Widerlager auch bei doppelbeplankten Verschalungen oder größeren Zwischenräumen immer an der Lochmündung anliegen. Insbesondere ist das Widerlager bei Ausführungen der Erfindung länger als der Zwischenraum zwischen der Verschalung und dem Ankergrund breit ist. Dadurch formt sich das Widerlager auf einer dem Ankergrund zugewandten Innenseite der Verschalung in die Verschalung ein.

Eine Ausgestaltung der Erfindung sieht eine Aussparung in der Dübelverlängerung vor, in der das Widerlager in der nicht ausgeschwenkten Grundstellung einliegt.

Die Dübelverlängerung besteht vorzugsweise aus einem anderen, insbesondere aus einem steiferen Material als der Spreizdübel. Beispielsweise ist der Spreizdübel im Spreizabschnitt aus einem faserlosen Kunststoff und die Dübelverlängerung aus einem faserverstärkten Kunststoff hergestellt. Der Spreizdübel und die Dübelverlängerung können beispielsweise zusammengesteckt, in anderer Weise verbunden oder beispielsweise auch die Dübelverlängerung an den Spreizdübel mittels Kunststoff-Spritzgussverfahren angespritzt sein oder umgekehrt.

Eine bevorzugte Ausgestaltung der Erfindung sieht vor, dass die Dübelverlängerung eine Anlage für das Widerlager aufweist, die das Widerlager in einer Vormontagestellung hält. In dieser Stellung befindet sich das Widerlager in einer Position zwischen der nicht ausgeschwenkten Grundstellung und der Widerlagerstellung. Diese Anlage ermöglicht ein einfacheres Zusammenstecken von Spreizdübel und Dübelverlängerung bei der Montage. Vorzugsweise dringt durch diese Ausgestaltung das Widerlager beim Durchführen durch das Loch in der Verschalung in eine Lochwand des Lochs ein und hält den Spreizdübel gegen Drehen. Durch Schwenken des Widerlagers radial nach innen lässt sich die Anlage zerstören derart, dass das Widerlager, beispielsweise von einem Loch in einer harten Verschalung, radial nach innen in die Grundstellung geschwenkt werden kann, um den Spreizdübel mit der Dübelverlängerung und dem Widerlager durch das Loch in der Verschalung durchführen zu können.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand eines in der Zeichnung dargestellten Ausführungsbeispiels näher erläutert. Es zeigen:
- Figur 1: eine Ansicht eines erfindungsgemäßen Abstandsbefestigers zur Verwendung in einem Verfahren gemäß der Erfindung;
- Figur 2: Einzelteile des Abstandsbefestigers aus Figur 1 in einer perspektivischen Darstellung;
- Figur 3: eine Ansicht eines Spreizdübels des Abstandsbefestigers aus den Figuren 1 und 2;
- Figur 4: einen im Vergleich mit den Figuren 1 und 3 um 90° gedrehten Achsschnitt einer Dübelverlängerung des Abstandsbefestigers aus Figuren 1 und 2; und
- Figur 5: eine Schnittdarstellung einer Verwendung des Abstandsbefestigers aus Figuren 1 und 2.

Die Figuren haben verschiedene Maßstäbe.

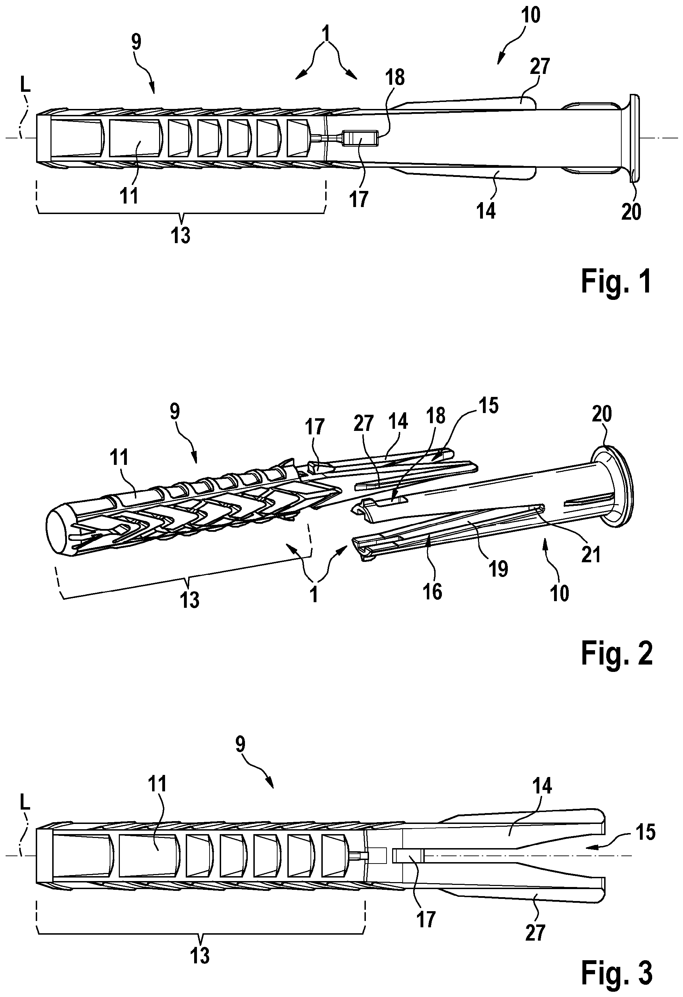

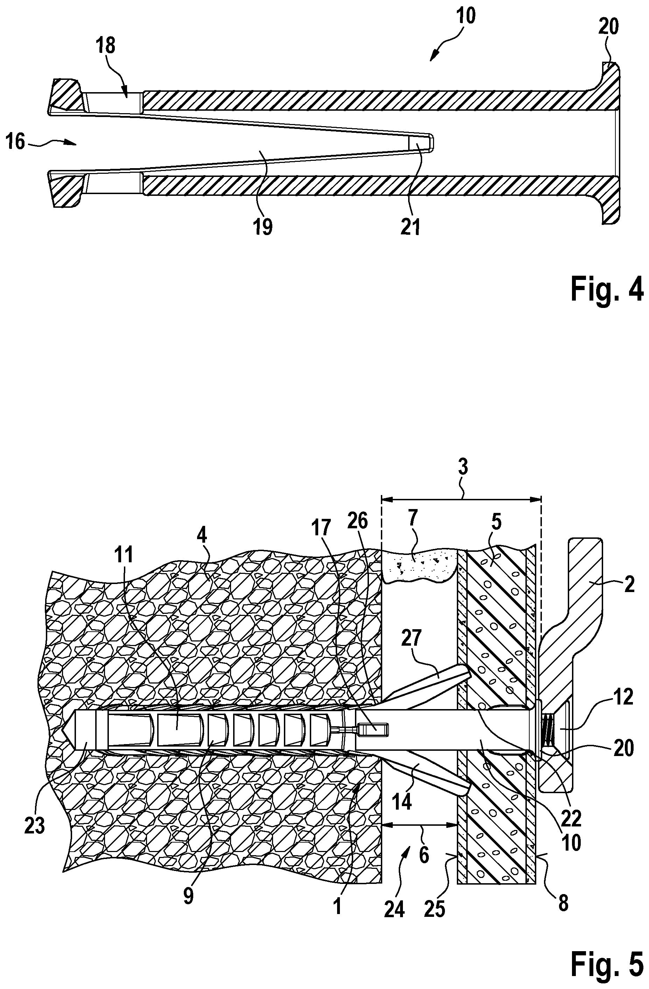

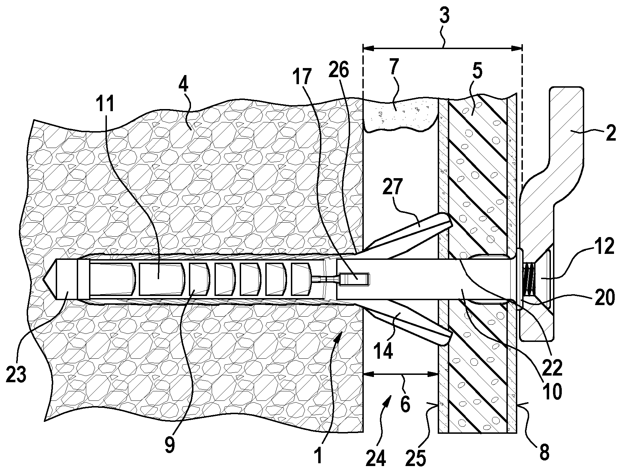

Der in Figur 1 dargestellte, erfindungsgemäße Abstandsbefestiger 1 ist zu einer Abstandsbefestigung eines Anbauteils 2 in einem ersten Abstand 3 von einem Ankergrund 4 vorgesehen, wie dies Figur 5 zeigt. Der Ankergrund 4 weist eine Verschalung 5 in einem zweiten, kleineren Abstand 6 von dem Ankergrund 4 auf. Die Verschalung 5 ist beispielsweise eine Gipskartonplatte, die beispielsweise mit Mörtelklecksen 7 in dem zweiten Abstand von dem Ankergrund 4 angebracht ist. Das ermöglicht eine ebene Oberfläche der Verschalung 5 bei nicht ebener Oberfläche des Ankergrunds 4. Der Ankergrund 4 ist insbesondere eine beispielsweise gemauerte oder betonierte Wand eines Gebäudes. Das Anbauteil 2 wird mit dem Abstandsbefestiger 1 auf einer dem Ankergrund 4 abgewandten Außenseite 8 der Verschalung 5 am Ankergrund 4 befestigt, wobei ein Lastabtrag vom Anbauteil 2 über den Abstandsbefestiger 1 in den Ankergrund 4 erfolgt. Durch die Anordnung der Verschalung 5 mittels Mörtelklecksen 7 am Ankergrund 4 entsteht zwischen der Verschalung 5 und dem Ankergrund 4 ein Zwischenraum 24, der zur Übertragung von Druckkräften vom Anbauteil 2 auf den Ankergrund 4 ungeeignet ist.

Der erfindungsgemäße Abstandsbefestiger 1 ist im Ausführungsbeispiel zweiteilig, er weist einen Spreizdübel 9 und eine Ankerverlängerung 10 auf, die im Ausführungsbeispiel auf ein hinteres Ende des Spreizdübels 9 gesteckt ist. Andere Verbindungen des Spreizdübels 9 und der Ankerverlängerung 10 oder auch eine einstückige Ausführung schließt die Erfindung nicht aus. Figur 2 zeigt den Spreizdübel 9 und die Dübelverlängerung 10 perspektivisch als Einzelteile, Figur 3 den Spreizdübel 9 als Einzelteil in Ansicht und Figur 4 die Dübelverlängerung 10 als Einzelteil in einer im Vergleich mit den Figuren 1 und 3 um 90° gedrehten Schnittdarstellung.

Der Spreizdübel 9 ist im Wesentlichen wie bekannte Spreizdübel ausgebildet: Er weist zwei einander bezüglich einer Axialebene des Spreizdübels 9 gegenüberliegende Spreizschenkel 11 und einen Schraubkanal auf, der den Spreizdübel 9 axial durchsetzt und der in der Axialebene zwischen den beiden Spreizschenkeln 11 hindurch geht. Durch Einbringen eines stiftförmigen Spreizelements 12 wie beispielsweise einer Spreizschraube oder eines Nagels in den Schraubkanal werden die Spreizschenkel 11 auseinandergedrückt, das heißt aufgespreizt, was auch als Aufspreizen des Spreizdübels 9 aufgefasst werden kann. Die beiden Spreizschenkel 11 definieren einen Spreizabschnitt 13 des Spreizdübels 9.

Als Besonderheit weist der Spreizdübel 9 des erfindungsgemäßen Abstandsbefestigers 1 hinten zwei Widerlager 14 in der Axialebene des Spreizdübels 9 auf, wobei mit "hinten" ein der Dübelverlängerung 10 zugewandtes beziehungsweise mit dieser verbundenes Ende des Spreizdübels 9 bezeichnet wird. Die Widerlager 14 sind einander bezüglich einer Längsachse L des Spreizdübels 9 gegenüber angeordnet. Sie verjüngen sich mit zunehmendem Abstand vom Spreizabschnitt 13 keilförmig. Die Widerlager 14 sind in einer radialen Richtung des Spreizdübels 9 breiter als sie in einer Umfangsrichtung des Spreizdübels 9 dick sind, wobei mit "breit" und "dick" Abmessungen der Widerlager 14 in der radialen Richtung und in der Umfangsrichtung des Spreizdübels 9 gemeint sind. Die Widerlager 14 sind dadurch in radialer Richtung biegesteifer als in Umfangsrichtung.

Außen weisen die Widerlager 14 Längsrippen 27 in der Axialebene des Spreizdübels 9 auf.

Ausgehend von spreizschenkelseitigen vorderen Enden der Widerlager 14 besteht zwischen den Widerlagern 14 ein Zwischenraum 15 von zunächst konstanter Breite, der sich in einem hinteren Abschnitt zu den Spreizschenkeln 11 fernen, hinteren Enden der Widerlager 14 V-förmig verbreitert, wie dies in Figur 3 zu sehen ist. Das durch die Dübelverlängerung 10 in den Spreizdübel 9 eingebrachte, stiftförmige Spreizelement 12 schwenkt, wenn es in den Zwischenraum 15 zwischen den Widerlagern 14 gelangt, die Widerlager 14 aus einer in Figuren 1 und 3 dargestellten, nicht ausgeschwenkten Grundstellung in eine radial nach außen geschwenkte Widerlagerstellung, in der die Widerlager 14 V-förmig auseinanderstehen. Diese Widerlagerstellung zeigt Figur 5.

Das stiftförmige Spreizelement 12 gelangt zuerst zwischen die Widerlager 14 und erst danach zwischen die Spreizschenkel 11, derart, dass das stiftförmige Spreizelement 12 zuerst die Widerlager 14 radial nach außen in die Widerlagerstellung schwenkt, bevor es die Spreizschenkel 11 aufspreizt. Befindet sich das stiftförmige Spreizelement 12 zwischen den Widerlagern 14, hält es die Widerlager 14 in der radial nach außen geschwenkten Widerlagerstellung.

Im Ausführungsbeispiel haben die Widerlager 14 eine Länge von mindestens 20 mm, vorzugsweise sind sie zwischen etwa 22 mm und etwa 25 mm lang und können auch länger sein.

Die als Einzelteil in einem Achsschnitt in Figur 4 dargestellte Dübelverlängerung 10 kann als Hülse aufgefasst werden, die einen entsprechend der Keilform der Widerlager 14 des Spreizdübels 9 keilförmigen Schlitz 16 in der Axialebene aufweist, der sich im Ausführungsbeispiel über etwa 2/3 einer Länge der Dübelverlängerung 10 erstreckt. Der Spreizdübel 9 weist sägezahnförmige Rastnasen 17 hinter seinen Spreizschenkeln 11 auf, an denen Fenster 18 der Dübelverlängerung 10 einrasten, wenn die Dübelverlängerung 10 mit ihrem Schlitz 16 auf die Widerlager 14 des Spreizdübels 9 gesteckt wird. Der Schlitz 16 in der Dübelverlängerung 10 bildet eine Aussparung 19, in der die Widerlager 14 in ihrer nicht ausgeschwenkten Grundstellung einliegen.

An einem hinteren, dem Spreizdübel 9 fernen Ende weist die Dübelverlängerung 10 im Ausführungsbeispiel einen Radialflansch 20 auf.

Die Dübelverlängerung 10 besteht aus einem steiferen Material als der Spreizdübel 9. Im Ausführungsbeispiel besteht der Spreizdübel 9 aus einem faserlosen Polyamid und die Dübelverlängerung 10 aus einem mit Glasfasern verstärktem Polyamid.

Wie in Figur 4 zu sehen ist, weist die Dübelverlängerung 10 an einem hinteren Ende ihres Schlitzes 16 dünnwandige Anlagen 21 auf, an denen die Widerlager 14 nach dem Zusammenstecken der Dübelverlängerung 10 und des Spreizdübels 9 außen anliegen. Die Anlagen 21 halten die Widerlager 14 in einer etwas nach außen geschwenkten Vormontagestellung. Die Anlagen 21 lassen sich zerstören, indem die Widerlager 14 radial nach innen in die nicht ausgeschwenkte Grundstellung geschwenkt werden.

Mit dem nachfolgend beschriebenen, erfindungsgemäßen Verfahren wird das Anbauteil 2 in dem ersten Abstand 3 von dem Ankergrund 4 an der Außenseite 8 der Verschalung 5 befestigt. Nachdem die Verschalung 5 mit beispielsweise den Mörtelklecksen 7 in dem zweiten, kleineren Abstand 6 von dem Ankergrund 4 an dem Ankergrund 4 angeordnet worden ist, wird ein Loch 22 durch die Verschalung 5 in den Ankergrund 4 gebohrt, wobei das Loch im Ankergrund 4 nachfolgend als Ankerloch 23 bezeichnet werden wird.

Anschließend wird gemäß dem erfindungsgemäßen Verfahren der Abstandsbefestiger 1 mit dem Spreizdübel 9 voraus durch das Loch 22 in der Verschalung 5 in das Ankerloch 23 im Ankergrund 4 eingebracht derart, dass sich der Spreizdübel 9 des erfindungsgemäßen Abstandsbefestigers 1 in dem Ankerloch 23 befindet. Die Dübelverlängerung 10 durchdringt das Loch 22 in der Verschalung 5, überbrückt einen Zwischenraum 24 zwischen der Verschalung 5 und dem Ankergrund 4 und reicht bis in das Ankerloch 23 im Ankergrund.

Die Widerlager 14 befinden sich in der Vormontagestellung und liegen außen an den Anlagen 21 der Dübelverlängerung 10 an. Beim Durchführen der Widerlager 14 durch das Loch 22 drückt die Verschalung 5 die Widerlager 14 radial nach innen in die Grundstellung, wobei die Anlagen 21 der Dübelverlängerung 10 zerstört werden. Die Widerlager 14 müssen dadurch das Loch 22 in der Verschalung 5 nicht aufweiten, um durch das Loch 22 durchtreten zu können, was das Einbringen des Abstandbefestigers 1 erleichtert.

Anschließend wird das stiftförmige Spreizelement 12 - im Ausführungsbeispiel eine Spreizschraube - durch eine Öffnung im Anbauteil 2 und durch die Dübelverlängerung 10 in den Spreizdübel 9 des erfindungsgemäßen Abstandsbefestigers 1 eingebracht. Wenn das stiftförmige Spreizelement 12 dabei zwischen die Widerlager 14 gelangt, schwenkt es die Widerlager 14 radial nach außen in die V-förmig nach außen stehende Widerlagerstellung, wie es in Figur 5 zu sehen ist. Sofern der Zwischenraum 24 zwischen der Verschalung 5 und dem Ankergrund 4 schmaler ist als die Widerlager 14 lang sind, formen sich die hinteren Enden der Widerlager 14 bei dem radialen nach-außen-Schwenken in eine dem Ankergrund 4 zugewandte Innenseite 25 der Verschalung 5 ein. Sofern eine zu dem Abstandsbefestiger 1 achsparallele Erstreckung der Widerlager 14 in der radial nach außen geschwenkten Widerlagerstellung größer als der Zwischenraum 24 zwischen der Verschalung 5 und dem Ankergrund 4 breit ist, verbleiben die hinteren Enden der Widerlager 14 in der Widerlagerstellung in der Innenseite der Verschalung 5, halten den Abstandsbefestiger 1 drehfest und stützen die Verschalung 5 am Ankergrund 4 ab.

Nachdem das stiftförmige Spreizelement 12 zwischen die Widerlager 14 eingebracht worden ist und bevor es zwischen die Spreizschenkel 11 des Spreizdübels 9 eingebracht wird, wird der Abstandsbefestiger 1 so tief in das Ankerloch 23 eingebracht, dass die Widerlager 14 in der radial nach außen geschwenkten Widerlagerstellung an einer verschalungsseitigen Lochmündung 26 des Ankerlochs 23 anliegen. Auf diese Weise legen die radial nach außen in die Widerlagerstellung geschwenkten Widerlager 14 des Spreizdübels 9 eine axiale Lage des Abstandsbefestigers 1 in Bezug auf den Ankergrund 4 und die Verschalung 5 und eine Einbringtiefe des Spreizdübels 9 in das Ankerloch 23 im Ankergrund 4 fest. Das zwischen die Widerlager 14 eingebrachte, stiftförmige Spreizelement 12 hält die Widerlager 14 in der radial nach außen geschwenkten Widerlagerstellung.

Anschließend wird das stiftförmige Spreizelement 12 weiter bis zwischen die Spreizschenkel 11 des Spreizdübels 9 eingebracht, spreizt die Spreizschenkel 11 beziehungsweise den Spreizdübel 9 auf und verankert den Spreizdübel 9 im Ankerloch 23 im Ankergrund 4.

Der Radialflansch 20 am hinteren Ende der Dübelverlängerung 10 liegt im Ausführungsbeispiel an der Außenseite 8 der Verschalung 5 an. Das stiftförmige Spreizelement 12 spannt das Anbauteil 2 axial gegen das hintere Ende der Dübelverlängerung 10 derart, dass das Anbauteil 2 über den erfindungsgemäßen Abstandsbefestiger 1 in dem ersten Abstand 3 von dem Ankergrund 4 am Ankergrund 4 befestigt ist. Ein Lastabtrag vom Anbauteil 2 erfolgt über den Abstandsbefestiger 1 in den Ankergrund 4 und nicht in die Verschalung 5. Dabei wird die Druckkraft aus dem Anbauteil 2 in die aus faserverstärktem Kunststoff hergestellte und daher steife und druckfeste Dübelverlängerung 10 und von dieser in den Spreizdübel 9 eingetragen. Die an der Lochmündung 26 anliegenden Widerlager 14 stützen den Spreizdübel 9 dabei gegen ein weiteres Einschieben des Spreizdübels 9 in das Ankerloch 23 ab und übertragen gemeinsam mit dem Spreizabschnitt 13 die Druckkraft in den Ankergrund 4.

Das erläuterte, erfindungsgemäße Verfahren ermöglicht die Abstandsbefestigung des Anbauteils 2 an dem Ankergrund 4 ohne einen planmäßigen Lastabtrag in die Verschalung 5.

Der Abstandsbefestiger 1 hält das Anbauteil 2 in einem Abstand von der Außenseite 8 der Verschalung 5, der so groß wie der Radialflansch 20 dick ist.

### Bezugszeichenliste

- 1: Abstandsbefestiger
- 2: Anbauteil
- 3: erster Abstand
- 4: Ankergrund
- 5: Verschalung
- 6: zweiter Abstand
- 7: Mörtelklecks
- 8: Außenseite
- 9: Spreizdübel
- 10: Dübelverlängerung
- 11: Spreizschenkel
- 12: Spreizelement
- 13: Spreizabschnitt
- 14: Widerlager
- 15: Zwischenraum
- 16: Schlitz
- 17: Rastnase
- 18: Fenster
- 19: Aussparung
- 20: Radialflansch
- 21: Anlage
- 22: Loch
- 23: Ankerloch
- 24: Zwischenraum
- 25: Innenseite
- 26: Lochmündung
- 27: Längsrippe
- L: Längsachse des Abstandsbefestigers 1 beziehungsweise des Spreizdübels 9

## Patentansprüche

1. Verfahren zu einer Abstandsbefestigung eines Anbauteils (2) in einem ersten Abstand (3) von einem Ankergrund (4) auf einer dem Ankergrund (4) abgewandten Außenseite (8) einer Verschalung (5), die in einem zweiten, kleineren Abstand (6) von dem Ankergrund (4) an dem Ankergrund (4) angeordnet ist, mit einem Abstandsbefestiger (1), der einen Spreizdübel (9) und eine Dübelverlängerung (10) aufweist, wobei der Abstandsbefestiger (1) durch ein Loch (22) in der Verschalung (5) in ein Ankerloch (23) in dem Ankergrund (4) eingebracht wird, derart, dass der Spreizdübel (9) in das Ankerloch (23) in dem Ankergrund (4) gelangt und die Dübelverlängerung (10) das Loch (22) in der Verschalung (5) durchdringt und einen Zwischenraum (24) zwischen der Verschalung (5) und dem Ankergrund (4) überbrückt, wobei der Spreizdübel (9) ein radial nach außen in eine Widerlagerstellung schwenkbares Widerlager (14) aufweist, das beim Einbringen des Spreizdübels (9) in das Ankerloch (23) in einer nicht ausgeschwenkten Grundstellung durch das Loch (22) in der Verschalung (5) hindurch in den Zwischenraum (24) zwischen der Verschalung (5) und dem Ankergrund (4) gelangt, **dadurch gekennzeichnet, dass** das Widerlager (14) zumindest in dem Zwischenraum (24) zwischen der Verschalung (5) und dem Ankergrund (4) radial nach außen in die Widerlagerstellung geschwenkt und in Anlage an einer der Verschalung (5) zugewandten Lochmündung (26) des Ankerlochs (23) in dem Ankergrund (4) gebracht wird.

2. Verfahren nach Anspruch 1, **dadurch gekennzeichnet, dass** das Anbauteil (2) auf der Außenseite (8) der Verschalung (5) mit einem stiftförmigen Spreizelement (12) an der Dübelverlängerung (10) des Abstandsbefestigers (1) befestigt wird, wobei das Spreizelement (12) zum Aufspreizen des Spreizdübels (9) zu einer Verankerung des Spreizdübels (9) in dem Ankerloch (23) in dem Ankergrund (4) durch die Dübelverlängerung (10) in den Spreizdübel (9) eingebracht wird, und wobei das Spreizelement (12) beim Einbringen in den Spreizdübel (9) das Widerlager (14) radial nach außen in die Widerlagerstellung schwenkt.

3. Verfahren nach Anspruch 1 oder 2, **dadurch gekennzeichnet, dass** die Dübelverlängerung (10) bis in das Ankerloch (23) in dem Ankergrund (4) ragt.

4. Verfahren nach einem oder mehreren der vorherigen Ansprüche, **dadurch gekennzeichnet, dass** das Widerlager (14) den Zwischenraum (24) zwischen der Verschalung (5) und dem Ankergrund (4) überbrückt.

5. Verfahren nach einem oder mehreren der vorherigen Ansprüche, **dadurch gekennzeichnet, dass** das Widerlager (14) in Eingriff in die Verschalung (5) gelangt.

6. Verfahren nach einem oder mehreren der Ansprüche 1 bis 5, **dadurch gekennzeichnet, dass** wenn das Widerlager (14) aus der nicht ausgeschwenkten Grundstellung radial nach außen in die Widerlagerstellung geschwenkt ist, eine Einbringtiefe des Spreizdübels (9) in das Ankerloch (23) im Ankergrund (4) begrenzt ist, derart, dass die Dübelverlängerung (10) aus dem Ankergrund (4) vorsteht.

7. Abstandsbefestiger (1), zur Verwendung in dem Verfahren nach einem oder mehreren der Ansprüche 1 bis 6, wobei der Abstandsbefestiger (1) einen Spreizdübel (9) und eine Dübelverlängerung (10) aufweist, **dadurch gekennzeichnet, dass** der Spreizdübel (9) ein Widerlager (14) aufweist, das aus einer nicht ausgeschwenkten Grundstellung radial nach außen in eine Widerlagerstellung schwenkbar ist, und dass das Widerlager (14) in einer radialen Richtung des Spreizdübels (9) breiter als in einer Umfangsrichtung des Spreizdübels (9) dick ist.

8. Abstandsbefestiger (1) nach Anspruch 7, **dadurch gekennzeichnet, dass** das stiftförmige Spreizelement (12) beim Einbringen in den Spreizdübel (9) das Widerlager (14) radial nach außen in die Widerlagerstellung schwenken kann und/oder dass das in den Spreizdübel (9) einbringbare stiftförmige Spreizelement (12) das Widerlager (14) in der radial nach außen geschwenkten Widerlagerstellung halten kann.

9. Abstandsbefestiger (1) nach einem oder mehreren der Ansprüche 7 bis 8, **dadurch gekennzeichnet, dass** der Spreizdübel (9) zwei einander gegenüber angeordnete Widerlager (14) oder mehrere über einen Umfang des Spreizdübels (9) verteilt angeordnete Widerlager (14) aufweist.

10. Abstandsbefestiger (1) nach Anspruch 9, **dadurch gekennzeichnet, dass** sich ein Zwischenraum (15) zwischen den Widerlagern (14) in einer nicht ausgeschwenkten Grundstellung der Widerlager (14) in Richtung eines dem Spreizdübel (9) fernen, hinteren Endes der Widerlager (14) vergrößert.

11. Abstandsbefestiger (1) nach einem oder mehreren der Ansprüche 7 bis 10, **dadurch gekennzeichnet, dass** das Widerlager (14) mindestens 20 mm und vorzugsweise zwischen 22 mm und 25 mm lang ist oder länger.

12. Abstandsbefestiger (1) nach einem oder mehreren der Ansprüche 7 bis 11, **dadurch gekennzeichnet, dass** das Widerlager (14) in einer Aussparung (19) in der Dübelverlängerung (10) angeordnet ist.

13. Abstandsbefestiger (1) nach einem oder mehreren der Ansprüche 7 bis 12, **dadurch gekennzeichnet, dass** die Dübelverlängerung (10) aus einem anderen, insbesondere steiferen Material besteht als der Spreizdübel (9).

14. Abstandsbefestiger (1) nach einem oder mehreren der Ansprüche 7 bis 13, **dadurch gekennzeichnet, dass** der Spreizdübel (9) aus einem faserlosen Kunststoff und die Dübelverlängerung (10) aus einem faserverstärkten Kunststoff hergestellt ist.

15. Abstandsbefestiger (1) nach einem oder mehreren der Ansprüche 6 bis 14, **dadurch gekennzeichnet, dass** die Dübelverlängerung (10) eine Anlage (21) für das Widerlager (14) aufweist, die das Widerlager (14) in einer Vormontagestellung hält und die durch Schwenken des Widerlagers (14) radial nach innen in die nicht ausgeschwenkte Grundstellung zerstörbar ist.

## Claims

1. A method for mounting an attachment part (2) at a first distance (3) from an anchor base (4) on an outer side (8) of a cladding (5) facing away from the anchor base (4), which is arranged at a second, smaller distance (6) from the anchor base (4) on the anchor base (4), using a distance fastener (1), which comprises an expansion plug (9) and a plug extension (10), wherein the distance fastener (1) is inserted through a hole (22) in the cladding (5) into an anchor hole (23) in the anchor base (4) through a hole (22) in the cladding (5), such that the expansion plug (9) enters the anchor hole (23) in the anchor base (4) and the plug extension (10) penetrates the hole (22) in the cladding (5) and creates an intermediate space (24) between the cladding (5) and the anchor base (4), wherein the expansion plug (9) comprises an abutment (14) that can be pivoted radially outward into an abutment position, which, when the expansion plug (9) is inserted into the anchor hole (23), passes through the hole (22) in the cladding (5) into the intermediate space (24) between the cladding (5) and the anchor base (4)**; characterized in that** the abutment (14) is pivoted radially outward into the abutment position, at least within the intermediate space (24) between the cladding (5) and the anchor base (4), is pivoted radially outward into the abutment position and supported by a hole mouth (26) of the anchor hole (23) in the anchor base (4) that faces the cladding (5).

2. The method according to claim 1, **characterized in that** the attachment part (2) is secured to the outer side (8) of the cladding (5) to the plug extension (10) of the distance fastener (1) using a pin-shaped expansion element (12), wherein the expansion element (12) is inserted into the expansion plug (9) via the plug extension (10) to expand the expansion plug (9) and anchor it in the anchor hole (23) in the anchor base (4) by the plug extension (10) into the expansion plug (9), and wherein the expansion element (12), upon being inserted into the expansion plug (9), pivots the abutment (14) radially outward into the abutment position.

3. A method according to claim 1 or 2, **characterized in that** the plug extension (10) extends into the anchor hole (23) in the anchor base (4).

4. A method according to one or more of the preceding claims, **characterized in that** the abutment (14) bridges the intermediate space (24) between the cladding (5) and the anchor base (4).

5. A method according to one or more of the preceding claims, **characterized in that** the abutment (14) engages with the cladding (5).

6. A method according to one or more of claims 1 through 5, **characterized in that** when the abutment (14) is swiveled radially outward from the non-swiveled rest position into the abutment position, the insertion depth of the expansion plug (9) into the anchor hole (23) in the anchor base (4) is limited such that the plug extension (10) protrudes from the anchor base (4).

7. Distance fastener (1) for use in the method according to one or more of claims 1 through 6, wherein the distance fastener (1) comprises an expansion plug (9) and a plug extension (10), **characterized in that** the expansion plug (9) comprises an abutment (14) that can be pivoted radially outward from a non-pivoted rest position into an abutment position, and **in that** the abutment (14) is wider in a radial direction of the expansion plug (9) than it is thick in a circumferential direction of the expansion plug (9).

8. Distance fastener (1) according to claim 7, **characterized in that** the pin-shaped expansion element (12), when inserted into the expansion plug (9), can pivot the abutment (14) radially outward into the abutment position, and/or that the pin-shaped expansion element (12), which can be inserted into the expansion plug (9), can hold the abutment (14) in the radially outwardly pivoted abutment position.

9. A distance fastener (1) according to one or more of claims 7 through 8, **characterized in that t**he expansion plug (9) has two abutments (14) arranged opposite one another or multiple abutments (14) distributed around the circumference of the expansion plug (9).

10. Distance fastener (1) according to claim 9, **characterized in that** an intermediate space (15) between the abutments (14), in a non-swivelled-out rest position of the abutments (14), increases in the direction of a rear end of the abutments (14) remote from the expansion plug (9).

11. A distance fastener (1) according to one or more of claims 7 through 10, **characterized in that** the abutment (14) is at least 20 mm long and preferably between 22 mm and 25 mm long or longer.

12. Distance fastener (1) according to one or more of claims 7 through 11, **characterized in that** the abutment (14) is disposed in a recess (19) in the plug extension (10).

13. Distance fastener (1) according to one or more of claims 7 through 12, **characterized in that** the plug extension (10) is made of a different material, in particular a stiffer material, than the expansion plug (9).

14. A distance fastener (1) according to one or more of claims 7 through 13, **characterized in that** the expansion plug (9) is made of a fiberless plastic and the plug extension (10) is made of a fiber-reinforced plastic.

15. A distance fastener (1) according to one or more of claims 6 through 14, **characterized in that** the plug extension (10) comprises a support (21) for the abutment (14), which holds the abutment (14) in a pre-assembly position and which can be broken by pivoting the abutment (14) radially inward into the non-pivoted rest position.

## Revendications

1. Procédé de fixation à distance d'une pièce rapportée (2) à une première distance (3) d'un support d'ancrage (4), sur une face extérieure (8) d'un habillage (5) opposée au support d'ancrage (4), qui est disposé à une deuxième distance, plus petite (6), du support d'ancrage (4) sur ledit support d'ancrage (4), à l'aide d'une fixation d'écartement (1), qui comporte une cheville à expansion (9) et une rallonge de cheville (10), l'élément de fixation d'écartement (1) étant introduit, à travers un trou (22) dans l'habillage (5), dans un trou d'ancrage (23) pratiqué sur le support d'ancrage (4) de telle sorte que la cheville à expansion (9) pénètre dans le trou d'ancrage (23) du support d'ancrage (4) et que la rallonge de cheville (10) traverse le trou (22) de l'habillage (5) et comble un espace intermédiaire (24) entre l'habillage (5) et le support d'ancrage (4), la cheville à expansion (9) comportant une butée (14) pouvant pivoter radialement vers l'extérieur dans une position de butée, laquelle, lors de l'insertion de la cheville à expansion (9) dans le trou d'ancrage (23), passe, depuis une position de base non pivotée, à travers le trou (22) dans l'habillage (5) pour pénétrer dans l'espace intermédiaire (24) entre l'habillage (5) et le support d'ancrage (4), **caractérisée en ce que** la butée (14) est pivotée, au moins dans l'espace intermédiaire (24) entre l'habillage (5) et le support d'ancrage (4), est pivotée radialement vers l'extérieur dans la position d'appui et est amenée en appui contre une embouchure (26) du trou d'ancrage (23) dans le support d'ancrage (4), tournée vers l'habillage (5).

2. Procédé selon la revendication 1, **caractérisée en ce que** la pièce rapportée (2) est fixée sur la face extérieure (8) de l'habillage (5) à l'aide d'un élément d'expansion en forme de tige (12) fixé à la rallonge de cheville (10) de la fixation d'écartement (1), l'élément d'expansion (12) étant inséré, par la rallonge de cheville (10), dans la cheville à expansion (9) afin d'écarter celle-ci et de l'ancrer dans le trou d'ancrage (23) pratiqué dans le support d'ancrage (4) par la rallonge de cheville (10) dans la cheville à expansion (9), et l'élément d'expansion (12), lors de son insertion dans la cheville à expansion (9), fait pivoter la butée (14) radialement vers l'extérieur dans la position de butée.

3. Procédé selon la revendication 1 ou 2, **caractérisée en ce que** la rallonge de cheville (10) s'enfonce jusqu'à l'intérieur du trou d'ancrage (23) dans le support d'ancrage (4).

4. Procédé selon l'une ou plusieurs des revendications précédentes, **caractérisé en ce que** la butée (14) comble l'espace intermédiaire (24) entre le habillage (5) et le support d'ancrage (4).

5. Procédé selon une ou plusieurs des revendications précédentes, **caractérisée en ce que** la butée (14) vient s'engager dans l'habillage (5).

6. Procédé selon une ou plusieurs des revendications 1 à 5, **caractérisée en ce que,** lorsque la butée (14) est pivotée radialement vers l'extérieur depuis la position de base non pivotée vers la position de butée, la profondeur d'insertion de la cheville à expansion (9) dans le trou d'ancrage (23) du support d'ancrage (4) est limitée de telle sorte que la rallonge de cheville (10) dépasse du support d'ancrage (4).

7. Fixation d'écartement (1), destinée à être utilisée dans le procédé selon l'une ou plusieurs des revendications 1 à 6, la fixation d'écartement (1) comportant une cheville à expansion (9) et une rallonge de cheville (10), **caractérisée en ce que** la cheville à expansion (9) comporte une butée (14) qui peut pivoter radialement vers l'extérieur depuis une position de base non déployée vers une position de butée, et **en ce que** la butée (14) est plus large dans une direction radiale de la cheville à expansion (9) que son épaisseur dans une direction circonférentielle de celle-ci.

8. Fixation d'écartement (1) selon la revendication 7, **caractérisée en ce que** l'élément d'expansion en forme de tige (12), lors de son insertion dans la cheville à expansion (9), peut faire pivoter la butée (14) radialement vers l'extérieur dans la position de butée et/ou **en ce que** l'élément d'expansion en forme de tige (12), pouvant être inséré dans la cheville à expansion (9), peut maintenir la butée (14) dans la position de butée pivotée radialement vers l'extérieur.

9. Fixation d'écartement (1) selon l'une ou plusieurs des revendications 7 à 8, **caractérisée en ce que** la cheville à expansion (9) comporte deux butées (14) disposées en vis-à-vis ou plusieurs butées (14) réparties sur la circonférence de la cheville à expansion (9).

10. Fixation d'écartement (1) selon la revendication 9, **caractérisée en ce que** l'espace intermédiaire (15) entre les butées (14), dans une position de base non pivotée des butées (14), s'agrandit en direction d'une extrémité arrière des butées (14) éloignée de la cheville à expansion (9).

11. Fixation d'écartement (1) selon l'une ou plusieurs des revendications 7 à 10, **caractérisée en ce que** la butée (14) mesure au moins 20 mm et de préférence entre 22 mm et 25 mm de long, voire plus.

12. Fixation d'écartement (1) selon l'une ou plusieurs des revendications 7 à 11, **caractérisée en ce que** la butée (14) est disposée dans un évidement (19) pratiqué dans la rallonge de cheville (10).

13. Fixation d'écartement (1) selon l'une ou plusieurs des revendications 7 à 12, **caractérisée en ce que** la rallonge de cheville (10) est constituée d'un matériau différent, notamment plus rigide, que la cheville à expansion (9).

14. Fixation d'écartement (1) selon l'une ou plusieurs des revendications 7 à 13, **caractérisée en ce que** la cheville à expansion (9) est fabriquée en une matière plastique non renforcée de fibres et que la rallonge de cheville (10) est fabriquée en une matière plastique renforcée de fibres.

15. Fixation d'écartement (1) selon une ou plusieurs des revendications 6 à 14, **caractérisée en ce que** la rallonge de cheville (10) comporte un appui (21) pour la butée (14), qui maintient la butée (14) dans une position de pré-montage et qui peut être détruit par pivotement de la butée (14) radialement vers l'intérieur dans la position de base non pivotée.
